Europäisches Patentamt

European Patent Office

Office européen des brevets

(19)

(11) Numéro de publication : **0 195 418**
**B1**

(12)

# FASCICULE DE BREVET EUROPÉEN

(45) Date de publication du fascicule du brevet :
26.04.89

(51) Int. Cl.⁴ : **B 60 B   5/02**

(21) Numéro de dépôt : **86103675.4**

(22) Date de dépôt : **18.03.86**

(54) **Roue de cycle en matériau composite, moyeu adaptable à une telle roue, et leurs procédés de fabrication.**

(30) Priorité : **20.03.85 FR 8504133**

(43) Date de publication de la demande :
**24.09.86 Bulletin 86/39**

(45) Mention de la délivrance du brevet :
**26.04.89 Bulletin 89/17**

(84) Etats contractants désignés :
**AT BE CH DE FR GB IT LI LU NL SE**

(56) Documents cités :
**EP—A— 0 065 086**
**EP—A— 0 149 026**
**FR—A— 2 449 542**
**US—A— 3 861 435**
**US—A— 3 917 352**

(73) Titulaire : **ALSTHOM**
**38, avenue Kléber**
**F-75784 Paris Cédex 16 (FR)**

(72) Inventeur : **Camusso, André**
**4 Place Benedict Teissier**
**F-69005 Lyon (FR)**
Inventeur : **Collomb, Georges**
**182 avenue Francis de Pressensé**
**F-69100 Villeurbanne (FR)**
Inventeur : **Gambade, Bernard**
**144 avenue Francis de Pressensé**
**F-69200 Venissieux (FR)**

(74) Mandataire : **Weinmiller, Jürgen et al**
**Lennéstrasse 9 Postfach 24**
**D-8133 Feldafing (DE)**

## Description

La présente invention concerne une roue de cycle comprenant un moyeu, des joues en matériau composite fibres-résine, de part et d'autre d'un remplissage interne, et une jante en matériau composite fibres-résine fabriquée indépendamment du reste de la roue, puis assemblée sur son pourtour. Elle concerne en outre un moyeu adaptable notamment à une telle roue, et des procédés de fabrication de cette roue et de ce moyeu.

On a déjà utilisé ou proposé des roues de cycle pleines comprenant des joues en tissu de fibres imprégnées de résine fixées sur des flasques du moyeu venant se recouvrir sur leurs bords externes, l'espace compris entre ces joues étant rempli d'un nid d'abeilles en aluminium ou d'une mousse rigide de matière plastique. Le boyau est disposé dans une gorge obtenue en disposant un boudin gonflable sur le recouvrement des deux joues, ou par un frettage final sur ce recouvrement, ou sur une jante en aluminium. Ces roues sont de structure que l'on peut qualifier de monobloc, et leur profil est bitronconique ou partiellement bitronconique.

Elles sont munies de moyeux spéciaux comportant deux coquilles montées de part et d'autre d'un moyeu classique et solidaires de la roue, sur les joues de laquelle elles sont collées. Leur structure monobloc entraîne un freinage relativement mauvais, et la possibilité de voiles importants en raison des contraintes de moulage, ainsi que d'un voile du boyau sur la gorge. Il est dès lors impossible de réparer ou changer le moyeu en cas de détérioration de celui-ci, ce qui peut contraindre à mettre la roue elle-même au rebut. De telles roues n'ont donc guère été utilisées jusqu'ici que dans des cas particuliers, notamment sur piste.

Il est décrit dans le document EP-A-0065086 une roue pour rotation à grande vitesse, notamment pour moulinet ou poulie, comprenant un moyeu métallique, des joues en matériau composite fibres-résine entourant un remplissage en matériau mousse, et une jante formée de couches radiales de fibres imprégnées de résine. Les joues sont réunies entre elles et au moyeu ou au remplissage par des goujons parallèles à l'axe de la roue. Leur jonction avec le moyeu est renforcée par des disques métalliques externes.

Une telle roue ne présente pas une rigidité suffisante pour pouvoir être employée sur des cycles, du fait que la jante est formée de couches radiales juxtaposées et que les joues sont affaiblies par les perçages de passage des goujons.

La présente invention a donc pour but de procurer une roue de cycle présentant une rigidité, une robustesse et une résistance aux chocs de la route améliorées, et permettant un bon freinage. La robustesse d'une telle roue permet son utilisation sur route, contrairement aux roues déjà connues. Elle a encore pour but de procurer un moyeu adaptable notamment à des roues de ce genre, susceptible d'être changé ou réparé sans mettre au rebut la roue correspondante.

La roue selon l'invention est caractérisée en ce que sa jante comprend au moins une couche intermédiaire de matériau formé de tissu de fibres de carbone imprégnées de résine concentrique à l'axe de la roue, et en ce que les joues sont reliées au moyeu par une bague d'adaptation.

Elle répond en outre de préférence à au moins l'une des caractéristiques suivantes :
- Ses joues sont séparées par une distance au plus égale à la dimension transversale du tube de selle.
- Son remplissage interne est constitué par un nid d'abeilles alvéolaire en papier cellulosique ou de polyamide aromatique, imprégnés de résine phénolique, ou en aluminium ou alliage léger.

Le procédé de fabrication selon l'invention d'une telle roue est caractérisé en ce que l'on fabrique une jante par moulage par injection, thermoformage, enroulement d'un laize sur un mandrin ou enroulement filamentaire, et la met en place dans un moule, en ce que l'on fabrique des joues lisses en tissu de fibres imprégnées de résine et un remplissage formé par une plaque prédécoupée de matériau plastique mousse, ou un nid d'abeilles alvéolaire en papier cellulosique ou de polyamide aromatique, imprégnés de résine phénolique, ou en aluminium ou alliage léger, puis en ce que l'on colle la jante, le remplissage interne et les joues entre eux dans le moule par polymérisation. La polymérisation est obtenue de préférence par cuisson.

Le moyeu de roue selon l'invention est caractérisé en ce qu'il comprend d'un côté un filetage sur toute la largeur d'une partie cylindrique externe, du côté opposé une partie cylindrique calibrée se terminant vers l'extérieur par un épaulement, et deux flasques-entretoises montés d'une part sur le filetage, d'autre part sur la partie cylindrique calibrée, et venant s'emboîter l'un dans l'autre, et délimitant dans leur zone d'emboîtement une gorge circonférentielle de logement des joues de la roue.

Pour une roue arrière, le filetage de ce moyeu est de préférence disposé du côté de la roue libre, et les flasques-entretoises sont immobilisés en rotation sur les parties latérales du moyeu à l'aide du mécanisme de roue libre.

Pour une roue avant, ses flasques-entretoises sont de préférence immobilisés en rotation sur les parties latérales du moyeu par un écrou à créneaux.

Le procédé de fabrication selon l'invention d'un tel moyeu est caractérisé en ce que l'on enlève par tournage les flasques latéraux d'un moyeu de cycle habituel, en ce que l'on prolonge ou forme d'un côté un filetage, en ce que l'on forme de l'autre côté une partie cylindrique calibrée terminée sur l'extérieur par un épaulement, puis en ce que l'on engage un flasque-entretoise en butée sur cet épaulement, en ce que l'on visse un autre flasque-entretoise sur le filetage et emboîte ce dernier sur le premier flasque.

Il est décrit ci-après, à titre d'exemples et en référence aux figures du dessin annexé, une roue et des moyeux selon l'invention ainsi que leurs procédés de fabrication.

La figure 1 représente la moitié d'une roue, avec coupe partielle par un plan perpendiculaire à son plan de symétrie.

La figure 2 représente en coupe une jante de roue.

La figure 3 représente un moule d'assemblage d'une roue à joues parallèles, à l'état ouvert.

La figure 4 représente un moule d'assemblage d'une roue de section droite bitronconique, à l'état ouvert.

La figure 5 représente un moyeu de roue avant montage des flasques-entretoises.

La figure 6 représente un moyeu de roue arrière, après assemblage des flasques-entretoises.

La figure 7 représente un moyeu de roue avant, après assemblage des flasques-entretoises.

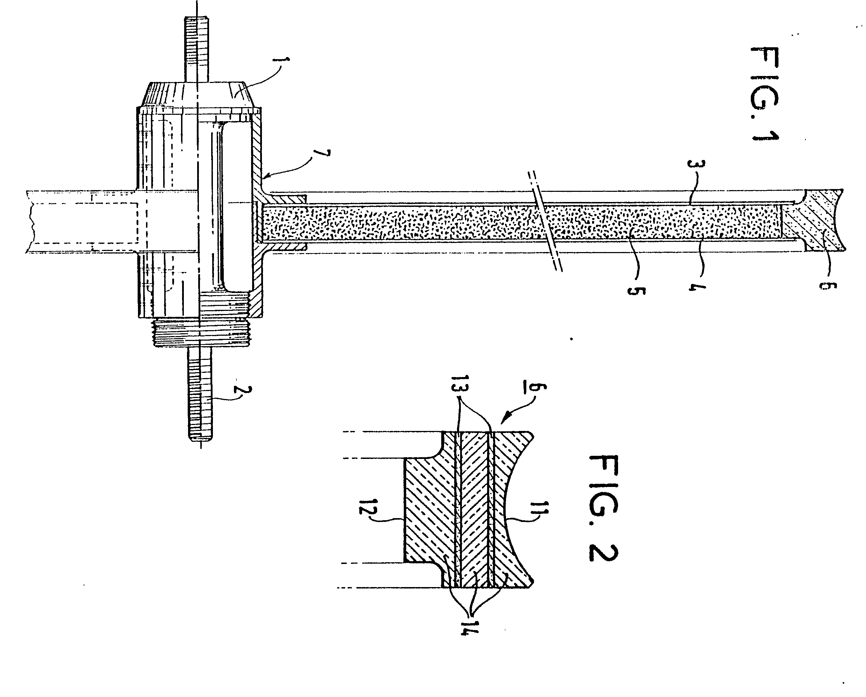

Dans la figure 1, la roue comporte un moyeu 1 autour de son axe 2. Des joues parallèles 3 et 4 en tissu de fibres de verre ou de carbone imprégnées de résine, soit au préalable, soit lors du moulage de l'ensemble de la roue, entourent un remplissage central 5 formé soit par une mousse à cellules fermées d'une matière plastique en plaque prédécoupée, soit par une mousse à cellules fermées injectée au pistolet entre les joues, soit par une structure en nid d'abeilles, en papier cellulosique ou de polyamide aromatique (par exemple le matériau commercialisé sous la marque Nomex par la société Dupont de Nemours), imprégnés de résine phénolique, ou en aluminium ou alliage léger.

Le remplissage central est entouré par une jante préformée 6 qui vient prendre appui sur le pourtour des joues. Ces dernières sont emboîtées dans des flasques-entretoises 7 solidaires du moyeu. La largeur totale de la roue est au plus égale à la dimension transversale du tube de selle du cadre du cycle (à son diamètre s'il est circulaire), de façon à réduire le résistance à l'avancement.

La structure de la jante est représentée de façon plus précise en figure 2. Celle-ci comporte une face concave externe 11 de logement du boyau, et une face de section droite plane 12 du côté interne. Elle est en fibres de verre, de carbone, de polyamide aromatique, ou d'un mélange de telles fibres, imprégnées de résine. Sa rigidité est renforcée par deux couches internes 12, 13 (fig. 2) de tissu de fibres de carbone, également imprégnées de résine. Cette jante est préformée, soit par moulage par injection ou par thermoformage, soit par enroulement d'un laize sur un mandrin, soit par enroulement filamentaire.

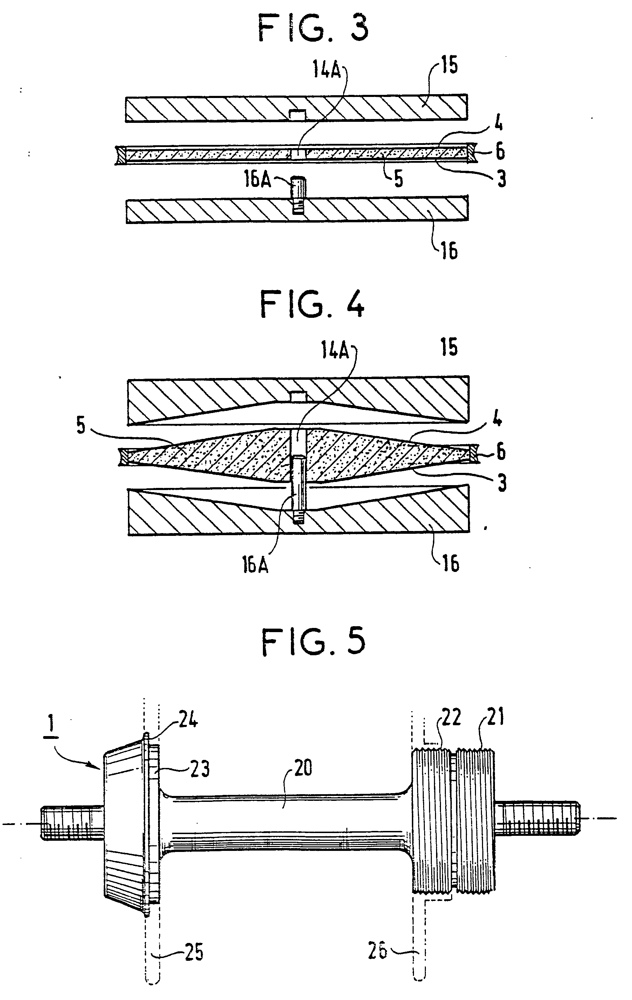

L'assemblage des éléments de la roue, percés d'un trou axial 14A, est effectué dans un moule à deux moitiés planes 15, 16 (fig. 3) dans laquelle est disposé un pion central 16A. La jante 6 est collée sur le remplissage et sur les joues à l'aide d'une colle époxy allégée. L'ensemble des éléments de la roue est solidarisé par cuisson assurant la polymérisation des résines.

Si l'on désire donner à la roue un profil bitronconique, qui assure une meilleure rigidité, on assemble les éléments de la roue dans un moule à deux moitiés 15, 16 de profil creux correspondant au profil de la roue (fig. 4).

Le moyeu selon l'invention, convenant particulièrement, mais non exclusivement, à la roue décrite ci-dessus, comprend un moyeu classique légèrement modifié. l'arbre central 20 (fig. 5) d'axe 2 se raccorde d'un côté à une partie cylindrique munie de filets externes 21, 22 sur toute sa longueur, contrairement aux moyeux connus, le filetage habituel étant prolongé vers l'intérieur. Il se raccorde de l'autre côté à une partie cylindrique 23 munie d'un épaulement 24. Les flasques 25, 26 d'accrochage des rayons d'un moyeu classique sont enlevés par tournage.

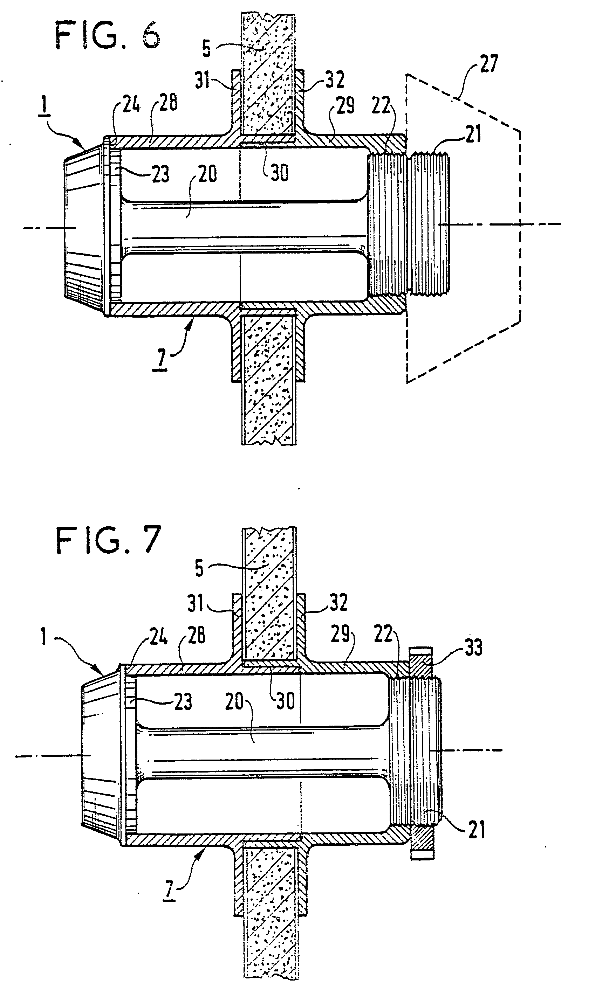

On adapte alors sur le moyeu modifié des flasques-entretoises 28, 29 (fig. 6, 7). Dans le cas d'une roue arrière (fig. 6), le flasque 28 vient en butée sur l'épaulement 24, et le flasque 29 est vissé sur le filetage 22 du moyeu. Le dispositif de roue libre 27 vient en butée sur le flasque 29. Les deux flasques s'emboîtent l'un dans l'autre le long d'une surface cylindrique de contact 30. Chacun d'eux est muni d'un rebord périphérique 31, 32, ces deux rebords enserrant les joues de la roue.

Dans le cas d'une roue avant (fig. 7), la structure est analogue, mais le flasque 29 est maintenu par un écrou à créneaux 33, du genre écrou de pédalier.

## Revendications

1. Roue de cycle comprenant un moyeu (1), des joues (3, 4) en matériau composite fibres-résine, de part et d'autre d'un remplissage interne (5), et une jante (6) en matériau composite fibres-résine fabriquée indépendamment du reste de la roue, puis assemblée sur son pourtour, caractérisée en ce que sa jante comprend au moins une couche intermédiaire (13) de matériau formé de tissu de fibres de carbone imprégnées de résine concentrique à l'axe de la roue, et en ce que les joues (3, 4) sont reliées au moyeu par une bague d'adaptation (7).

2. Roue selon la revendication 1, caractérisée en ce que ses joues (3, 4) sont séparées par une distance au plus égale à la dimension transversale du tube de selle.

3. Roue selon les revendications 1 ou 2, caractérisée en ce que son remplissage interne (5) est constitué par un nid d'abeilles alvéolaire en papier cellulosique ou de polyamide aromatique, imprégnés de résine phénolique, ou en aluminium ou alliage léger.

4. Procédé de fabrication d'une roue de cycle selon la revendication 1, caractérisé en ce que l'on fabrique une jante (6) par moulage, par injection, thermoformage, enroulement d'un laize sur un mandrin ou enroulement filamentaire, et la met en place dans un moule, en ce que l'on fabrique des joues lisses (3, 4) en tissu de fibres imprégnées de résine et un remplissage formé par une plaque prédécoupée de matériau plastique mousse, ou un nid d'abeilles alvéolaire en papier cellulosique ou de polyamide aromatique, imprégnés de résine phénolique, ou en aluminium ou alliage léger, puis en ce que l'on colle la jante, le remplissage interne et les joues entre eux dans le moule par polymérisation.

5. Procédé selon la revendication 4, caractérisé en ce que la polymérisation est obtenue par cuisson.

6. Moyeu pour roue de cycle en matériau composite, caractérisé en ce qu'il comprend d'un côté un filetage (21, 22) sur toute la largeur d'une partie cylindrique externe, du côté opposé une partie cylindrique calibrée (23) se terminant vers l'extérieur par un épaulement (24), et deux flasques-entretoises (28-29) montés d'une part sur le filetage, d'autre part sur la partie cylindrique calibrée, et venant s'emboîter l'un dans l'autre, et délimitant dans leur zone d'emboîtement une gorge circonférentielle de logement des joues de la roue.

7. Moyeu selon la revendication 6 pour roue arrière, caractérisé en ce que le filetage est disposé du côté de la roue libre, et en ce que les flasques-entretoises sont immobilisés en rotation sur les parties latérales du moyeu à l'aide du mécanisme de roue libre (27).

8. Moyeu selon la revendication 6 pour roue avant, caractérisé en ce que les flasques-entretoises sont immobilisés en rotation sur les parties latérales du moyeu par un écrou à créneaux (33).

9. Procédé de fabrication d'un moyeu selon la revendication 6, caractérisé en ce que l'on enlève par tournage les flasques latéraux d'un moyeu de cycle habituel, en ce que l'on prolonge ou forme d'un côté un filetage, en ce que l'on forme de l'autre côté une partie cylindrique calibrée terminée vers l'extérieur par un épaulement, puis en ce que l'on engage un flasque-entretoise en butée sur cet épaulement, et en ce que l'on visse un autre flasque-entretoise sur le filetage et emboîte ce dernier sur le premier flasque.

**Claims**

1. A cycle wheel comprising a hub (1), cheeks (3, 4) of a fibre-resin composite material on either side of an internal fill (5), and a rim (6) of fibre-resin composite material manufactured independently of the other parts of the wheel, then assembled around its periphery, characterized in that its rim comprises at least an intermediate layer (13) of a material made of a carbon fibre fabric impregnated with resin and disposed concentrically about the axis of the wheel, and that the cheeks (3, 4) are connected by means of an adaptive ring (7).

2. A wheel according to claim 1, characterized in that its cheeks (3, 4) are separated by a distance which is not greater than the transverse dimension of the saddle tube.

3. A wheel according to claims 1 or 2, characterized in that its internal fill (5) is constituted by a honeycomb of cellulose paper or aromatic polyamide paper impregnated with phenol resin, or of aluminium, or of light alloy.

4. A method of manufacturing a cycle wheel according to claim 1, characterized in that a rim (6) is made by injection molding, by thermoforming, by winding a strip on a mandrel, or by winding a filament, and is then placed in a mold, that smooth cheeks (3, 4) are made of fabric constituted by resin-impregnated fibres and that a fill is made constituted by a cut-out plate of plastic foam material, or of a honeycomb of phenol resin impregnated cellulose paper or aromatic polyamide paper, or of a honeycomb of aluminium or light alloy, and that the rim, the internal fill, and the cheeks are bonded together inside the mold by polymerization which is preferably obtained by heating.

5. A method according to claim 4, characterized in that the polymerization is obtained by heating.

6. A hub for a cycle wheel made of composite material, characterized in that it comprises on one side a thread (21, 22) extending over the entire width of an outer cylindrical portion, and on the opposite side a calibrated cylindrical portion (23) which is outwardly terminated by a shoulder (24), together with two spacer-flanges (28, 29), mounted on the one hand on the thread, and on the other hand on the calibrated cylindrical portion, said spacer-flanges interfitting each other and delimiting a circumferential groove in their interfitting zone adapted to receive the cheeks of the wheel.

7. A hub according to claim 6, for a rear wheel, characterized in that the thread is disposed on the freewheel side, and the spacer-flanges are prevented from rotating together with the side portions of the hub by means of the freewheel mechanism (27).

8. A hub according to claim 6, for a front wheel, characterized in that the spacer-flanges are preferably prevented from rotating together with the side portions of the hub by means of a notched nut (33).

9. A method of manufacturing a hub according to claim 6, characterized in that the side flanges are removed from a conventional hub by means of a lathe, that a thread is formed or extended on one side, that a calibrated cylindrical portion outwardly terminated by a shoulder is formed on the other side, that then a spacer-flange is engaged by abutment against said shoulder, and that another spacer-flange is screwed onto the thread and fitted onto the first spacer-flange.

**Patentansprüche**

1. Fahrrad-Rad mit einer Nabe (1), Radwangen (3, 4) aus einem Harz-Faser-Verbundwerkstoff zu beiden Seiten einer Innenfüllung (5), und mit einer unabhängig vom übrigen Teil des Rades hergestellten, dann darauf befestigten Felge (6) aus einem Harz-Faser-Verbundwerkstoff, dadurch gekennzeichnet, daß seine Felge mindestens eine Zwischenschicht (13) aus einem Material umfaßt, das aus einem harzgetränkten Kohlefasergewebe konzentrisch zur Radachse aufgebaut ist, und daß die Radwangen (3, 4) mit der Nabe über einen Anpassungsring (7) verbunden sind.

2. Rad nach Anspruch 1, dadurch gekennzeichnet, daß seine Radwangen (3, 4) voneinander durch einen Abstand getrennt sind, der höchstens der Querabmessung des Sattelrohres entspricht.

3. Rad nach den Ansprüchen 1 oder 2, dadurch gekennzeichnet, daß seine Innenfüllung (5) aus einer Bienenwabenstruktur aus mit Phenolharz getränktem Zellulosepapier oder aromatischem Polyamidpapier, oder aus Aluminium oder einer Leichtmetall-Legierung besteht.

4. Verfahren zur Herstellung eines Fahrrad-Rads nach Anspruch 1, dadurch gekennzeichnet, daß eine Felge (6) durch Spritzguß, Thermoformen, Aufwickeln eines Streifens auf eine Wickelhülse oder Fadenaufwickeln erzeugt und in einer Form in Stellung gebracht wird, daß glatte Radwangen (3, 4) aus harzgetränktem Fasergewebe hergestellt werden und eine Füllung erzeugt wird, die aus einer vorgeschnittenen Platte aus Schaumkunststoff oder aus einer Bienenwabenstruktur aus einem mit Phenolharz getränkten Zellulosepapier oder aromatischem Polyamidpapier oder aus einer Leichtmetall-Legierung besteht, und daß dann die Felge, die Innenfüllung und die Radwangen miteinander in der Form durch Polymerisation verklebt werden.

5. Verfahren nach Anspruch 1, dadurch gekennzeichnet, daß die Polymerisation durch Brennen bewirkt wird.

6. Nabe für ein Fahrrad-Rad aus Verbundmaterial, dadurch gekennzeichnet, daß sie auf der einen Seite ein über die ganze Breite eines äußeren zylindrischen Abschnittes laufendes Gewinde (21, 22) und auf der entgegengesetzten Seite einen kalibrierten zylindrischen, nach außen in einer Schulter (24) endenden Abschnitt (23) aufweist, wobei zwei Abstandsflansche (28, 29) einerseits auf dem Gewinde, andererseits auf dem kalibrierten zylindrischen Abschnitt angebracht sind, welche ineinandergreifen und in ihrer Vereinigungszone eine Umfangsrinne zur Aufnahme der Radwangen begrenzen.

7. Nabe nach Anspruch 6 für ein Hinterrad, dadurch gekennzeichnet, daß das Nabengewinde vorzugsweise auf der Freilaufseite angebracht wird, wobei die Abstandsflansche gegen Drehung an den Seitenpartien der Nabe durch die Freilaufmechanik (27) gesichert werden.

8. Nabe nach Anspruch 6 für ein Vorderrad, dadurch gekennzeichnet, daß die Abstandsflansche vorzugsweise gegen Drehung auf den Seitenpartien der Nabe durch eine Kronenmutter (33) gesichert werden.

9. Verfahren zur Herstellung einer Nabe nach Anspruch 6, dadurch gekennzeichnet, daß durch Abdrehen die Seitenflansche einer herkömmlichen Fahrradnabe entfernt werden, daß an einer Seite ein Gewinde verlängert oder angebracht wird, daß an der anderen Seite ein kalibrierter zylindrischer, nach außen in einer Schulter endender Abschnitt gebildet wird, daß dann ein Abstandsflansch gegen die Schulter angelegt wird, daß ein anderer Abstandsflansch auf das Gewinde geschraubt und mit dem ersten Flansch in Eingriff gebracht wird.

FIG. 1

FIG. 2

1

# FIG. 3

# FIG. 4

# FIG. 5

FIG. 6

FIG. 7